(19) Europäisches Patentamt
European Patent Office
Office européen des brevets

(11) **EP 0 901 641 B1**

(12) **EUROPÄISCHE PATENTSCHRIFT**

(45) Veröffentlichungstag und Bekanntmachung des Hinweises auf die Patenterteilung:
**09.04.2003 Patentblatt 2003/15**

(21) Anmeldenummer: **98910591.1**

(22) Anmeldetag: **07.02.1998**

(51) Int Cl.⁷: **G01S 7/41**

(86) Internationale Anmeldenummer:
**PCT/DE98/00356**

(87) Internationale Veröffentlichungsnummer:
**WO 98/036289 (20.08.1998 Gazette 1998/33)**

(54) **VERFAHREN ZUR ZIELKLASSIFIZIERUNG**

TARGET CLASSIFICATION METHOD

PROCEDE DE CLASSIFICATION DE CIBLES

(84) Benannte Vertragsstaaten:
**DE ES FR GB NL**

(30) Priorität: **14.02.1997 DE 19705730**

(43) Veröffentlichungstag der Anmeldung:
**17.03.1999 Patentblatt 1999/11**

(73) Patentinhaber: **EADS Deutschland GmbH 81663 München (DE)**

(72) Erfinder: **SCHMID, Johannes D-89075 Ulm (DE)**

(74) Vertreter: **Meel, Thomas et al Patentassessor, c/o Dornier GmbH L H G 88039 Friedrichshafen (DE)**

(56) Entgegenhaltungen:
**EP-A- 0 626 583        DE-A- 19 518 993**

**Beschreibung**

Die Erfindung betrifft ein Verfahren zur Zielklassifizierung bei einer Radaranlage nach dem Oberbegriff des Patentanspruchs 1.

Aus der DE 29 28 907 A1 und der DE 30 02 148 A1 sind Verfahren zur Klassifizierung bewegter Ziele bekannt, bei welchen in einer Doppler-Radaranlage aus den Echosignalen Doppler-Spektren gebildet und diese neben der Ermittlung der Zielgeschwindigkeit aus der Dopplerfrequenz der Ziel-Hauptlinie des Doppler-Spektrums noch auf Nebenlinien untersucht werden, die von periodischen Änderungen des Reflektionsverhaltens des Ziels oder Teilen des Ziels herrühren- Beispielsweise kann aus dem Abstand der Nebenlinien die Blattfolgefrequenz eines Triebwerklaufrads eines Flugzeugtriebwerks oder die Gliedlänge einer Panzerkette bestimmt und zur Zielklassifizierung herangezogen werden. Die Blattfolgefrequenz eines Flugzeugtriebwerks ist aber nur bedingt als Klassifizierungsmerkmal geeignet, da die Drehfrequenz des Laufrades über einen großen Bereich var iieren kann.

Aus der DE 38 26 754 ist bekannt, anstelle der Blattfolgefrequenz des Laufrades die Blattzahl als Klassifizierungs-Grund-Größe zu verwenden. Die dort beschriebene Ermittlung der Blattzahl wird erschwert durch die relativ geringe Energie der dazu erforderlichen Signalbestandteile (insbesondere im sog. Tail Aspect), durch Intermodulation zwischen den Triebwerksstufen und durch Überlagerung mehrerer Echos bei mehr als einem Triebwerk am Flugzeug oder bei Mehrzielsituationen.

Derartige Verfahren zur Zielklassifizierung werden auch als nicht-kooperative Verfahren bezeichnet, da von dem zu klassifizierenden Ziel keine (Ziel-) Kennung ausgesandt wird.

Der Erfindung liegt die Aufgabe zugrunde, ein gattungsgemäßes nicht-kooperatives Verfahren zur Zielklassifizierung anzugeben, welches eine hohe Zuverlässigkeit besitzt und welches weitgehend unempfindlich ist gegenüber möglichen Störungen.

Diese Aufgabe wird gelöst durch die im kennzeichnenden Teil des Patentanspruchs 1 angegebenen Merkmale. Vorteilhafte Ausgestaltungen und/oder Weiterbildungen sind den weiteren Ansprüchen zu entnehmen.

Die Erfindung wird im folgenden anhand eines Ausführungsbeispiels, das sich auf die Klassifizierung von sog. Düsenf lugzeugen bezieht, näher erläutert. Diese besitzen zum Antrieb mindestens ein Triebwerk, das mindestens ein Kompressorrad zur Ansaugung und Komprimierung der Luft besitzt.

Ein solches Kompressorrad besitzt Schaufeln, die in den Echosignalen einer Radaranlage eine periodische Struktur (Lini enspektrum) erzeugen. Wenn das Ziel im sog. Tail Aspect beobachtet wird, ist in den Echosignalen entsprechend eine von den Turbinenschaufeln hervorgerufene Struktur enthalten.

Soll nun bei einem solchen fliegenden Düsenflugzeug eine nicht-kooperative Identifikation sowie Klassifizierung mittels einer Radaranlage durchgeführt werden, so werden die von dem zu klassifizierenden Ziel (Düsenflugzeug) reflektierten Radarsignale (Echosignale) zunächst in bekannter Weise in den Videobereich herabgemischt. Dort entsteht dann ein sog. Doppler-Signal, das insbesondere zwei Si gnalanteile enthält, einerseits ein sog. Zellendoppler-Signal, welches der Geschwindigkeit des Zieles (Düsenflugzeug) entspricht und andererseits ein diesem überlagertes Klassifizierungs-Signal, das von den Echosignalen an dem Kompressorrad und/oder den Kompressorschaufeln herrührt.

Für die Zielidentifikation und/oder Zielklassifizierung wird nun zunächst das Leistungs-Spektrum des Doppler-Signals gebildet. Dieses enthält eine über einem vorgebbaren Schwellwert liegende (Haupt-)Linie, welche der Geschwindigkeit des Zieles (Zellendoppler-Signal) entspricht. Eine Auswertung der spektralen Lage (Frequenzlage) ermöglicht beispielsweise, zu entscheiden, ob das Ziel ein Verkehrsflugzeug oder ein im allgemeinen wesentlich schneller fliegendes Militärflugzeug ist. Dieses Leistungs-Spektrum wird nun in an sich bekannter Weise bezüglich seiner Frequenzanlage derart verschoben, daß der (Haupt-) Linie die Dopplerfrequenz Null zugeordnet wird.

Es werden nun die in dem Leistungs-Spektrum vorhandenen weiteren Linien ermittelt , die einen vorgebbaren (Leis tungs-) Schwellwert überschreiten und welche eine Doppler-Frequenz ungleich Null, bezogen auf die (Haupt-)Linie, besitzen.

Es seien dies Linien bei den Frequenzen $f_0$, $f_1$ ... $f_{n-1}$ mit jeweils zugehörigen Pegeln $p_0$, $p_1$ ... $p_{n-1}$. Aus diesen Linien wird dann in an sich bekannter Weise die Blattfolgefrequenz bf des Triebwerks ermittelt. Bei bekannter Blattfolgefrequenz bf wird dann über ein an sich bekanntes Verfahren die Blattzahl bz des Triebwerks ermittelt.

Dieses Verfahren ist nicht zuverlässig. Zum einen kann die Blattfolgefrequenz falsch ermittelt worden sein, zum anderen wird unter Umständen auch bei richtiger Blattfolgefrequenz eine falsche Blattzahl gefunden. Durch das folgende Verfahren werden derartige Fehler korrigiert.

Für jede der Linien $f_i$ , i = 0, 1...n wird der Ausdruck ($f_i$ / bf) $\cdot$ bz gebildet und dieser auf die nächste ganze Zahl $bz_i$ = nint($f_i$ / bf $\cdot$ bz) gerundet. Die Frequenzen werden also umskaliert, wobei als neue "natürliche" Frequenzeinheit die Drehfrequenz fdreh = bf / bz auftritt. Mit diesen transformierten Blattzahl $bz_i$ wird ein "Merkmalsvektor" v( 0...99 ) definiert mittels der Vorschrift: v ($bz_i$ ) = $p_i$ , i = 0, 1 ... n und $p_i$ = zur Linie $f_i$ gehörender Pegel.

Diejenigen Blattzahl $bz_i$ die größer als 99 (oder eine andere vorgebbare obere Grenze ) sind, werden dabei ignoriert. Weiter wird v(k) = 0 gesetzt für diejenigen Indices k, die keiner möglichen Blattzahl $bz_i$ ent-

sprechen.

Dieser Merkmalsvektor v wird nun mittels einer Datenverarbeitungsanlage ausgewertet unter Verwendung eines sog. neuronalen Netzes. Dabei wird der Merkmalsvektor v als Eingangsvektor in das neuronale Netz eingegeben. Eine bevorzugte Ausführungsform der Erfindung sieht vor, daß hierfür ein sog . "Backpropagation-Netz" mit einer verdeckten Schicht verwendet wird. Die Theorie derartiger Netze wird in der Literatur , beispielsweise in D. Rumelhart und J. McClelland: "Parallel Distributed Processing", MIT Press, 1986, S. 318 bis 331, näher beschrieben. Bei dem für die hier beschriebene Zielklassifizierung verwendeten Netz ist die Zahl der Eingangsneutronen gleich der Anzahl der Merkmale im Merkmalsvektor v, die Anzahl der Ausgangsneuronen ist gleich der Anzahl der Zielklassen. Die Anzahl der Neuronen der verdeckten Schicht hängt von der Anzahl der Eingangs- und Ausgangsneuronen ab; bei 100 Eingangsneuronen und 10 bis 15 Zielklassen ( = Ausgangsneuronen) erweisen sich beispielsweise 25 verdeckte Neuronen als brauchbar. Das Netz wird in üblicher Weise off-line trainiert. Nach dem Training berechnet das Netz zu jedem gegebenen Merkmalsvektor und jeder Zielklasse die Wahrscheinlichkeit, daß dieser Merkmalsvektor der betreffenden Zielklasse angehört.

Eine Möglichkeit besteht darin, die Blattfolgefrequenz, die Blattzahl sowie die Drehzahl eines Kompressorrades entsprechend einem Verfahren zu bestimmen, welches in dem deutschen Patent DE 38 26 754 beschrieben ist. Bei diesem Verfahren wird zunächst durch eine kohärente Signalverarbeitung aus den empfangenen Echosignalen ein Leistungs-Spektrum (Doppler - Spektrum) erzeugt. Dieses wird anschließend normiert bezüglich der Hauptlinie, welche der Geschwindigkeit des Flugzeugs oder Hubschraubers entspricht. Das derart normierte Spektrum enthält Linien, welche der Blattfolgefrequenz entsprechen. Werden diese Linien entfernt, so entsteht ein Restspektrum, das in den Zeitbereich zurücktransformiert wird. In diesem sind Linien vorhanden, aus denen mittels eines Schwellwertes die Drehzahl des Kompressorrades (Laufrades) ermittelt wird. Aus Blattfolgefrequenz und Drehzahl wird durch eine Quotientenbildung die Blattzahl des Laufrades (Anzahl der Kompressorschaufeln auf dem Laufrad) ermittelt.

Es ist vorteilhaft, diese Größen, die ein Kompressor laufwerk und damit einen Flugzeugtyp charakterisieren, zu speichern. Denn dann können die entsprechenden (aktuell) gemessenen Größen mit den gespeicherten Größen verglichen und daraus der gesuchte Flugzeugtyp ermittelt werden.

Weiterhin ist es vorteilhaft, zu jedem zu klassifizierenden Flugzeugtyp alle diesem entsprechende Flugzustände, die mittels eines Radars erfaßbar sind, zu speichern. Diese Flugzustände umfassen beispielsweise den möglichen und/oder bevorzugten Geschwindigkeitsbereich in beladenem oder unbeladenem Zustand sowie die zu diesen Zuständen gehörenden Flughöhen. Weiterhin können beispielsweise die zugehörigen möglichen Kurvenradien ermittelt und gespeichert werden. Denn derartige Größen charakterisieren einen Flugzeugtyp und können zur Klassifizierung verwendet werden zusätzlich zu der beschriebenen Klassifizierung mittels des Merkmalsvektors. Eine derartige kombiniert e Auswertung aller durch ein Radar erfaßbaren Größen ermöglicht vorteilhafterweise eine besonders zuverlässige Klassifizierung, beispielsweise mit einer Fehlerrate kleiner 5 %.

Die Erfindung ist nicht auf das beschriebene Beispiel beschränkt, sondern sinngemäß auf weitere anwendbar, beispielsweise auf die Identifizierung und/ oder Klassifizierung von Hubschraubern. Denn diese besitzen zum Antrieb der Rotoren ebenfalls ein Turbinentriebwerk. Für dies es kann in der beschriebenen Weise ein Merkmalsvektor ermittelt und ausgewertet werden. Es entsteht also neben der (Flug-)Geschwindigkeit, Rotordrehzahl, (Rotor-)Blattzahl ein zusätzliches Merkmal. Die Kombination dieser Merkmale ermöglicht dann eine sehr zuverlässige Klassifizierung von Hubschraubern.

**Patentansprüche**

1. Verfahren zur Zielklassifizierung eines flugfähigen Zieles, das von einem Turbinenlaufwerk angetrieben wird, mittels eines Doppler-Radars, wobei

   - aus den von dem Ziel reflektierten und von dem Doppler-Radar empfangenen Echosignalen durch kohärente Signalverarbeitung ein zu den Echosignalen gehörendes Leistungs-Spektrum erzeugt wird und
   - aus dem Leistungs-Spektrum zumindest die Blattfolgefrequenz sowie die Blattzahl des Kompressors oder der Turbine ermittelt werden,

   **dadurch gekennzeichnet**,

   - dass aus der Blattfolgefrequenz bf und der Blattzahl bz vom Flugzustand unabhängige Größen gebildet werden gemäß der Formel

   $$bz_i = nint ((f_i / bf) \cdot bz),$$

   wobei

   $bz_i$ = i-te transformierte Blattzahl,
   $f_i$ = i-te Frequenz der im Leistungs-Spektrum auftretenden Linien mit dem zugehörigen Pegel $p_i$ und
   nint = Funktion zur Ermittlung der nächsten ganzen Zahl bedeuten,

- dass mit diesen Größen ein Merkmalsvektor v gebildet wird gemäß der Formel $v(bz_i) = p_i$ , wobei $v(bz_i)$ das $bz_i$-te Element des Vektors v darstellt,
- dass der Merkmalsvektor als Eingangsgröße für ein neuronales Netz verwendet wird und
- dass das neuronale Netz durch einen lernenden Programmiervorgang derart eingestellt wird, dass zu jedem Merkmalsvektor eine diesem zugeordnete Zielklassifikation entsteht.

2. Verfahren nach Anspruch 1, **dadurch gekennzeichnet, daß** zur Ermittlung der Blattfolgefrequenz (bf) und der Blattzahl

- das Leistungs-Spektrum zunächst normiert wird,
- aus dem normierten Spektrum alle zu einer möglichen vorgebbaren Blattfolgefrequenz gehörenden Spektrallinien entfernt werden, so daß ein Restspektrum entsteht,
- das Restspektrum in den Zeitbereich zurücktransformiert wird und darin mittels eines Pegelschwellwertes die Hauptlinie ermittelt wird, welche der Drehfrequenz des Laufrades des Turbinenlaufwerks zugeordnet wird und
- durch eine Quotientenbildung von Blattfolgefrequenz und Drehfrequenz die Blattzahl des Laufrades bestimmt wird.

3. Verfahren nach Anspruch 1 oder Anspruch 2, **dadurch gekennzeichnet,**

- **daß** als neuronales Netz ein Backpropagation-Netz mit einer verdeckten Schicht gewählt wird und
- **daß** das Backpropagation-Netz durch einen Programmier- sowie Lernvorgang derart ausgebildet wird, daß als dem Merkmalsvektor zugeordneter Auagabewert ein für jeden möglichen Flugzeugtyp zugeordneter Wahrscheinlichkeitswert entsteht.

4. Verfahren nach einem der vorhergehenden Ansprüche , **dadurch gekennzeichnet, daß** zur Erhöhung der Zuverlässigkeit bei der Klassifizierung zusätzlich zu dem einen Flugzeugtyp zugeordneten Wahrscheinlichkeitswert zumindest eine der Größen

- Spektrallinien, welche das Triebwerk charakterisieren,
- Blattzahlen, welche das Triebwerk charakterisieren,
- den Fluszustand des zu klassifizierenden Flugzeugs bestimmende Größen

ermittelt und ausgewertet werden.

5. Verfahren nach einem der vorhergehenden Ansprüche, **dadurch gekennzeichnet,**

- **daß** zu jedem vorgebbaren, zu klassifizierenden Flugzeugtyp alle diesen charakterisierenden Größen, die durch ein Radar ermittelbar sind, gespeichert werden,
- **daß** den gespeicherten Größen entsprechende Größen gemessen werden,
- **daß** die gemessenen Größen mit den gespeicherten Größen verglichen werden und
- **daß** in Abhängigkeit von dem Vergleich die Klassifikation erfolgt.

**Claims**

1. Method for target classification of a target which can fly and is driven by a turbo engine, by means of a Doppler radar, in which

- a power spectrum which is associated with the echo signals is produced by coherent signal processing from the echo signals which are reflected by the target and are received by the Doppler radar, and
- at least the blade repetition frequency as well as the number of blades on the compressor or on the turbine are determined from the power spectrum,

**characterized**

- **in that** variables which are independent of the flight condition are formed from the blade repetition frequency bf and from the number of blades bz, using the formula $bz_i = nint((f_i/bf) bz)$, where $bz_i$ is the i-th transformed number of blades, $f_i$ = the i-th frequency of the lines which occur in the power spectrum with the associated level pi, and
  nint = the function for determining the next integer,
- **in that** a feature vector v is formed with these variables using the formula $v(bz_i) = p_i'$ where $v(bz_i)$ is the $bz_i$-th element of the vector v,
- **in that** the feature vector is used as an input variable for a neural network, and
- **in that** the neural network is adjusted by means of a learning programming process such that target classification which is associated with each feature vector is formed for each feature vector.

2. Method according to Claim 1, **characterized in that**, in order to determined the blade repetition frequency (bf) and the number of blades,

- the power spectrum is first of all normalized,
- all the spectral lines which are associated with one possible blade repetition frequency which can be predetermined are removed from the normalized spectrum thus resulting in a remaining spectrum
- the remaining spectrum is transformed back to the time domain, and a level threshold value is used to determine the main line which is associated with the rotation frequency of the rotor of the turbine engine, and
- the number of blades on the rotor is determined by forming the quotient of the blade repetition frequency and the rotation frequency.

3. Method according to Claim 1 or Claim 2, **characterized**

- **in that** a back propagation network with a concealed layer is chosen as the neural network, and
- **in that** the back propagation network is formed by a programming and learning process, such that a probability value which is associated with each possible aircraft type is produced as the output value associated with the feature vector.

4. Method according to one of the preceding claims, **characterized in that**, in order to improve the reliability of the classification process, in addition to the probability value which is associated with an aircraft type, at least one of the following variables:

- spectral lines which characterize the engine,
- numbers of blades which characterize the engine,
- the flight condition of the variables which determine the aircraft to be classified are determined and evaluated.

5. Method according to one of the preceding claims, **characterized,**

- **in that**, for each aircraft type which can be predetermined and is to be classified, all the variables which characterize this aircraft type and can be determined by a radar are stored,
- variables which correspond to the stored variables are measured,
- **in that** the measured variables are compared with the stored variables, and
- **in that** the classification process is carried out as a function of the comparison.

**Revendications**

1. Procédé de classification de cibles d'une cible pouvant voler, propulsée par une mécanique à turbine, au moyen d'un radar Doppler, dans lequel

- on produit un spectre de puissance appartenant aux signaux d'échos par le traitement cohérent des signaux à partir des signaux d'échos réfléchis par la cible et reçus par le radar Doppler, et
- on détermine au moins la fréquence de succession des pales ainsi que le nombre de pales du compresseur ou de la turbine à partir du spectre de puissance,

**caractérisé en ce**

- **qu'**on constitue des grandeurs indépendantes de l'état du vol à partir de la fréquence de succession des pales bf et du nombre de pales bz selon la formule

$$bz_i = nint((f_i/bf)bz),$$

où $bz_i$ = i-te transformée du nombre de pales,
$f_i$ = i-te fréquence des lignes se manifestant dans le spectre de puissance avec le niveau associé $p_i$ et
nint = fonction pour l'élaboration du nombre entier le plus proche,

- **qu'**on forme un vecteur caractéristique $v_i$ à partir de ces grandeurs selon la formule
$v(bz_i) = p_i$, où $v(bz_i)$ représente l'élément $bz_i$-te du vecteur v,
- **qu'**on utilise le vecteur caractéristique comme grandeur d'entrée d'un réseau neuronal et
- **qu'**on ajuste le réseau neuronal au moyen d'un processus de programmation d'apprentissage de manière à former une classification de cibles correspondant à chaque vecteur caractéristique.

2. Procédé selon la revendication 1, **caractérisé en ce que** pour l'élaboration de la fréquence de succession des pales (bf) et du nombre de pales,

- on normalise d'abord le spectre de puissance,
- on élimine du spectre normalisé toutes les lignes spectrales appartenant à une fréquence de succession des pales pouvant être définie de manière à former un spectre résultant,
- on réalise la transformation inverse du spectre résultant dans le domaine temporel et on détermine au moyen d'une valeur de niveau de seuil, la ligne principale qui est attribuée à la fréquence de rotation du rotor de la mécanique de la turbine et
- on établit le nombre de pales du rotor en formant le quotient de la fréquence de succession des pales et de la fréquence de rotation.

3.  Procédé selon la revendication 1 ou la revendication 2, **caractérisé en ce**

    -   **qu'**on choisit comme réseau neuronal, un réseau à rétro-propagation avec une couche cachée et
    -   **qu'**on réalise le réseau à rétro-propagation au moyen d'un processus de programmation et d'apprentissage de manière à former une valeur de probabilité attribuée à chaque type possible d'avion comme valeur de sortie attribuée au vecteur caractéristique.

4.  Procédé selon l'une des revendications précédentes, **caractérisé en ce que** pour augmenter le niveau de confiance lors de la classification, en plus de la valeur de probabilité attribuée à un type d'avion, on détermine et on exploite au moins une des grandeurs

    -   lignes spectrales caractérisant le propulseur,
    -   nombre de pales caractérisant le propulseur,
    -   les grandeurs définissant l'état du vol de l'avion à classifier.

5.  Procédé selon l'une des revendications précédentes, **caractérisé en ce**

    -   **qu'**on enregistre toutes ces grandeurs caractérisantes pouvant être élaborées par un radar, pour chaque type défini d'avion à classifier,
    -   **qu'**on mesure les grandeurs correspondant aux grandeurs enregistrées,
    -   **qu'**on compare les grandeurs mesurées avec les grandeurs enregistrées et
    -   **qu'**on réalise la classification en fonction de la comparaison.